# EUROPÄISCHE PATENTSCHRIFT

(11) **EP 2 669 557 B1**
(45) Veröffentlichungstag und Bekanntmachung des Hinweises auf die Patenterteilung: **30.05.2018**
(21) Anmeldenummer: 13166947.5
(22) Anmeldetag: 08.05.2013
(51) Int. Cl.: F16K 11/07, F16K 35/16, F15B 13/04, F16K 31/56

(54) **Rastvorrichtung für ein Schieberventil**
Latching device for a spool valve
Dispositif d'arrêt pour une soupape à tiroir

(30) Priorität: 29.05.2012 DE 102012208943
(43) Veröffentlichungstag der Anmeldung: 04.12.2013
(73) Patentinhaber: ROBERT BOSCH GMBH, 70442 Stuttgart (DE)
(72) Erfinder: Rovacchi, Luca, 42100 Reggio Emilia (IT); Bollero, Vincenzo, 20064 Gorgonzola (Milan) (IT); Pingani, Davide, 42020 Vezzano (IT); Rosselli, Loris, 42020 San Polo (IT)
(74) Vertreter: Maiß, Harald

(56) Entgegenhaltungen:
- EP-A1- 1 785 654
- CN-A- 1 451 888
- DE-A1-102008 022 509
- US-A- 959 022
- US-A- 3 646 968
- US-A- 3 680 583
- US-A- 4 026 326
- US-A- 4 565 219
- US-A- 5 836 335
- US-A- 6 065 496
- US-B1- 6 220 567

## Beschreibung

Die Erfindung betrifft ein Schieberventil mit einer Rastvorrichtung gemäß dem Oberbegriff des Patentanspruchs 1.

Bei Schieberventilen - insbesondere bei Wegeventilen -, werden über Positionen entlang einer Längsachse eines Ventilschiebers Druckmittelverbindungen gesteuert. Dazu ist der Ventilschieber in einem Ventilgehäuse z.B. über Elektromagneten bewegbar. Zur Zentrierung werden oft Federn verwendet, die den Ventilschieber in seine Grundstellung entlang der Längsachse drängen. Aus Gründen der Sicherheit kann es notwendig sein, vom Ventilschieber eingenommene Schaltstellungen oder dessen Grundstellung mechanisch abzusichern. Dazu ist es aus dem Stand der Technik bekannt, Rastvorrichtungen vorzusehen.

Die Druckschrift US 4 565 219 A zeigt ein Schieberventil mit zwei verschraubten Polrohren.

Die Druckschrift EP 0 751 302 B1 zeigt ein Rastvorrichtung für einen Ventilschieber eines Schieberventils. Dabei ist eine Rastenleiste am Ventilschieber befestigt und entlang einer Längsachse bzw. Verschieberichtung des Ventilschiebers ausgerichtet. In Verschieberichtung sind beabstandet zueinander Rastkerben vorgesehen. Quer dazu kann über einen Druckmittelzylinder ein Rastelement bewegt werden, das in die jeweilige Rastkerben eintaucht. Der Druckmittelzylinder wird über ein elektrisch betätigtes Ventil gesteuert.

Nachteilig an derartigen Rastvorrichtungen für Schieberventile ist der vorrichtungstechnische Aufwand, der sich aus dem Druckmittelzylinder und dem elektrisch betätigten Ventil ergibt.

Die Druckschriften US 959,022 A und US 6,220,567 B1 offenbaren jeweils ein Schieberventil mit einem Ventilschieber, der über einer Rastvorrichtung in einer Position festgesetzt werden kann. Über die Kraft einer Feder wird die Rastvorrichtung eingerastet und über einen Elektromagneten kann sie gegen die Kraft der Feder entrastet werden, so dass der Ventilscheiber verstellbar ist.

Dem gegenüber liegt der Erfindung die Aufgabe zu Grunde, ein Schieberventil mit einer vorrichtungstechnisch vereinfachte Rastvorrichtung zu schaffen.

Diese Aufgabe wird gelöst durch ein Schieberventil mit den Merkmalen des Patentanspruchs 1.

Eine Rastvorrichtung dient zur Verrastung eines Ventilschiebers, der in einem Ventilgehäuse eines erfindungsgemäßen Schieberventils linearbeweglich aufgenommen ist. Die Rastvorrichtung hat ein - vorzugsweise linearbewegliches - Rastelement, das direkt oder indirekt formschlüssig in wenigstens eine Rastkerbe eingreifen kann. Dabei ist die wenigstens eine Rastkerbe so mit dem Ventilschieber gekoppelt, dass dieser entlang der Längsachse fixiert ist bzw. nicht mehr relativ zum Ventilgehäuse bewegt werden kann, wenn das Rastelement in die wenigstens eine Rastkerbe eingerastet ist. Eine erste Feder spannt das Rastelement in Richtung der Rastkerbe vor. Dabei umfasst das Rastelement einen Permanent- oder einen Ferromagneten und die Rastvorrichtung eine elektrische Spule, welche ein Magnetfeld erzeugen kann, mit dem das Rastelement gegen die Vorspannkraft der ersten Feder bewegt und außer Eingriff mit der wenigstens einen Rastkerbe gebracht werden kann.

Erfindungsgemäß umfasst die Rastvorrichtung ein Rastgehäuse, in dem ein Rastschieber bezüglich der Längsachse linearbeweglich aufgenommen ist, wobei die wenigstens eine Rastkerbe an dem Rastschieber vorgesehen ist. Dann kann das Rastgehäuse modular an das Ventilgehäuse angesetzt werden. Der Rastschieber kann als rotationssymmetrisches Teil auf den Ventilsschieber oder auf einen daran befestigten Stößel geschoben sein und durch eine Mutter gegen einen Radialbund des Ventilsschiebers oder des Stößels gesichert sein.

Erfindungsgemäß weist das Ventilgehäuse ein erstes und ein zweites Innengewinde zum Anschluss eines Polrohrs auf, wobei das erste und das zweite Innengewinde konzentrisch bezüglich der Längsachse an gegenüber liegenden Seiten des Ventilgehäuses angeordnet sind. Weiterhin weist das das Rastgehäuse ein Außengewinde auf, welches zum Eingriff mit dem ersten oder dem zweiten Innengewinde am Ventilgehäuse ausgebildet ist, wobei am Rastgehäuse gegenüber liegend zum Außengewinde ein Innengewinde vorgesehen ist, welches komplementär zum Außengewinde ausgebildet und konzentrisch zur Längsachse angeordnet ist. Damit kann das Polrohr, das zur Befestigung am Ventilgehäuse ausgebildet ist, statt dessen einfach am Rastgehäuse befestigt werden.

Weitere vorteilhafte Ausgestaltungen der Erfindung sind in den abhängigen Patentansprüchen beschrieben.

Um die Lage des Anschlusses der Spule oder des Polrohres frei verstellen zu können wird es bevorzugt, wenn das Rastgehäuse wenigstens ein erstes und ein zweites Gehäuseteil aufweist, wobei der Rastschieber ausschließlich am ersten Gehäuseteil bezüglich der Längsachse geführt ist. Das Außengewinde ist am zweiten Gehäuseteil vorgesehen, wobei das erste und das zweite Gehäuseteil mit wenigstens einem Schraubbolzen verbunden sind, welcher das erste Gehäuseteil durchsetzt und von der Seite des Innengewindes her eingeschraubt werden kann.

Vorzugsweise ist das zweite Gehäuseteil rotationssymmetrisch ausgebildet, wobei ein drittes dem Rastgehäuse zugeordnetes Gehäuseteil vorgesehen ist, welches das zweite Gehäuseteil umgreift, wobei der wenigstens eine Schraubbolzen in das dritte Gehäuseteil einschraubbar ist. Damit kann die Lage des Anschlusses der Spule oder des Polrohres stufenlos eingestellt werden, um die nicht vorhersehbare Einschraubtiefe des zweiten Gehäuseteils auszugleichen.

Vorzugsweise ist der Ventilschieber entlang der Längsachse zwischen eine zweiten Feder und einer dritten Feder eingespannt. Die zweite Feder ist zwischen dem zweiten Gehäuseteil und dem Ventilschieber eingespannt. Die zweite Feder ist bei dem Schieberventil ohne die erfindungsgemäße Rastvorrichtung im Polrohr angeordnet und kann bei einer Nachrüstung des Schieberventils an diese Stelle gesetzt werden.

Besonders flexibel ist die Montage der erfindungsgemäßen Rastvorrichtung, wenn die wenigstens eine Rastkerbe rotationssymmetrisch bezüglich der Längsachse ausgebildet ist.

Besonders sicher ist die Fixierung des Ventilsschiebers durch die erfindungsgemäße Rastvorrichtung, wenn die wenigstens eine Rastkerbe senkrecht zur Längsachse angeordnete Flanken - vorzugsweise ein rechteckiges Querschnittsprofil - aufweist, wobei das Rastelement an die Rastkerbe angepasst ist. Dann kann das Rastelement nicht durch eine in Richtung der Längsachse wirkende Kraft außer Rasteingriff gebracht werden.

Da der Permanent- oder der Ferromagnet verschleißen würde, wenn er unmittelbar in die Rastkerbe eingreifen würde, wird es bevorzugt, wenn das Rastelement eine gesonderte Rastnase aus Stahl umfasst, welche in die wenigstens eine Rastkerbe eingreifen kann. Dann wird die Rastnase fest mit dem Permanent- oder dem Ferromagneten verbunden, vorzugsweise mit diesem verschraubt.

Für Spulen zur Betätigung des Rastschiebers verwenden zu können, die zur Betätigung Ventilschieber bereits vorhanden sind, wird es bevorzugt, wenn das Rastelement in einem gesonderten Rastrohr aufgenommen ist, welches ein dicht verschlossenes Ende und ein gegenüber liegendes offenes Ende hat, und wenn das Rastrohr am offenen Ende mit dem Rastgehäuse fest verbunden - vorzugsweise verschraubt - ist. Dabei ist der Permanent- oder der Ferromagnet gleitbeweglich an der Innenseite des Rastrohrs geführt, wobei die Spule das Rastrohr umgibt.

Um eine Bewegung des Rastelements auch gegen einen im Rastgehäuse wirkenden Öldruck zu ermöglichen, wird es bevorzugt, wenn das Rastelement wenigstens einen Druckausgleichsdurchgang aufweist. Diese durchsetzt das Rastelement in Erstreckungsrichtung des Rastrohres.

Im Folgenden wird anhand der Figuren zwei Ausführungsbeispiele der Erfindung detailliert beschrieben. Es zeigen:

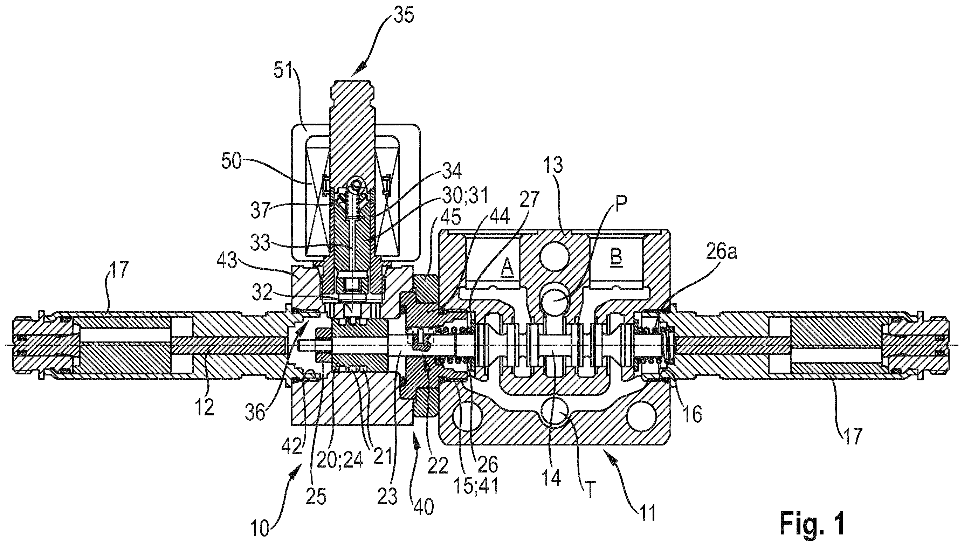

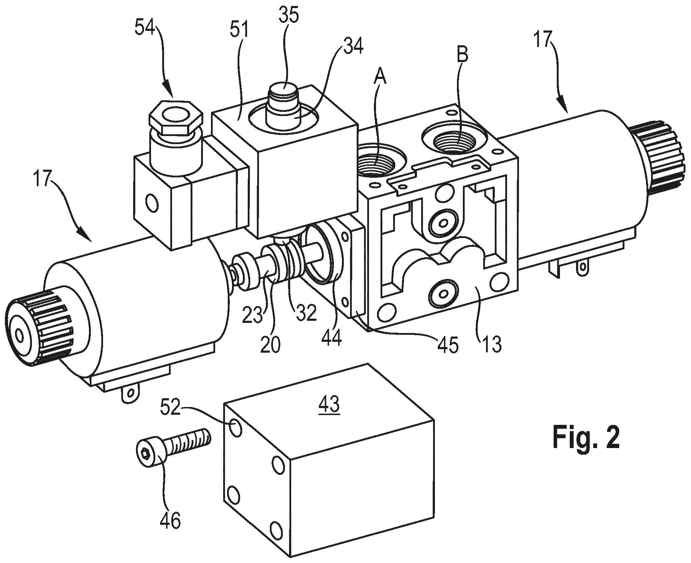

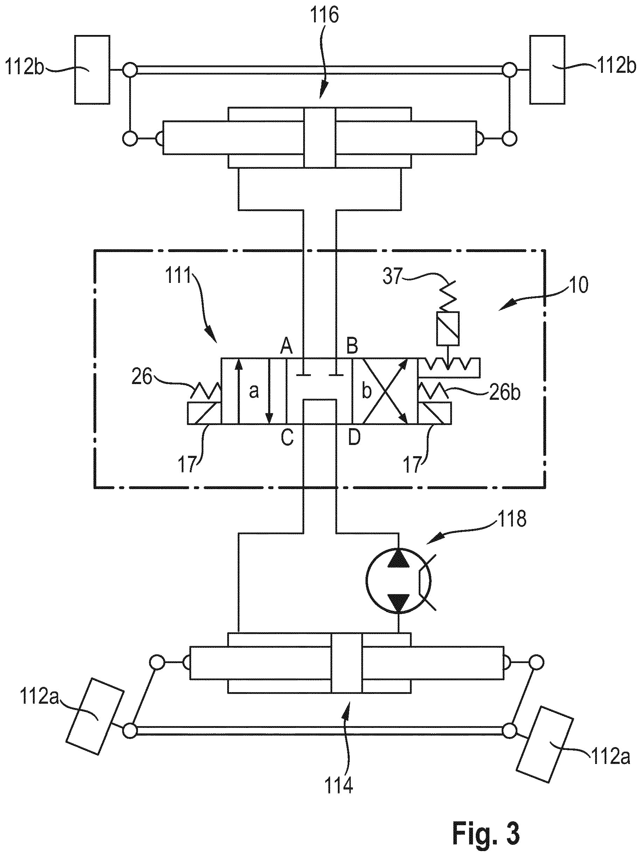

Figur 1 ein Ausführungsbeispiel des erfindungsgemäßen Schieberventils mit Rastvorrichtung im seitlichen Schnitt, Figur 2 das Ausführungsbeispiel gemäß Figur 1 in einer perspektivischen Ansicht, und Figur 3 einen Anwendungsfall eines weiteren Ausführungsbeispiels des erfindungsgemäßen Schieberventils mit Rastvorrichtung.

Figur 1 zeigt ein Ausführungsbeispiel des erfindungsgemäßen Schieberventils 11 mit Rastvorrichtung 10. Das Schieberventil 11 hat ein Ventilgehäuse 13, an dem zwei Arbeitsanschlüsse A, B, ein Pumpenanschluss P und ein Tankanschluss T vorgesehen sind. Entlang einer Längsachse 12 kann ein Ventilschieber 14 aus der in Figur 1 gezeigten Grundstellung in zwei seitlich davon angeordnete Schaltstellungen bewegt werden, so dass das Schieberventil 11 ein 4/3-WegeSchaltventil ist. Durch eine Bewegung des Ventilschiebers 14 (in Figur 1) nach links wird der Pumpenanschluss P mit dem Arbeitsanschluss A verbunden, während der Arbeitsanschluss B zum Tankanschluss T entlastet wird. Bei einer dem entgegen gesetzten Bewegung des Ventilschiebers 14 (in Figur 1) nach rechts wird der Pumpenanschluss P mit dem Arbeitsanschluss B verbunden, während der Arbeitsanschluss A zum Tankanschluss T entlastet wird.

Beidseitig des Ventilschiebers 14 sind zu dessen Bewegung Polrohre 17 vorgesehen, wobei das (in Figur 1) rechte Polrohr 17 direkt in ein Innengewinde 16 des Ventilgehäuses 13 eingeschraubt ist, während das (in Figur 1) linke Polrohr 17 indirekt über ein Rastgehäuse 40 am Ventilgehäuse 13 befestigt ist. Dabei ist das Rastgehäuse 40 über ein Außengewinde 41 in ein Innengewinde 15 des Ventilgehäuses 13 eingeschraubt, wobei das erste Innengewinde 15 prinzipiell dem zweiten Innengewinde 16 entspricht. Das Rastgehäuse 40 wiederum hat ein Innengewinde 42, das den beiden Innengewinden 15, 16 des Ventilgehäuses 13 entspricht. Damit kann das (in Figur 1) linke Polrohr 17 als unverändertes - dem rechten Polrohr 17 entsprechendes - Bauteil auch dann verwendet werden, wenn die Rastvorrichtung 10 am Schieberventil 11 ergänzt wurde.

Genauer betrachtet hat das Rastgehäuse 40 ein erstes Gehäuseteil 43, ein zweites Gehäuseteil 44, das zwischen dem ersten Gehäuseteil 43 und dem Ventilgehäuse 13 vorgesehen ist, und ein drittes Gehäuseteil 45, das das zweite Gehäuseteil 44 umgreift. Dabei ist das Außengewinde 41, über das das Rastgehäuse 40 am Ventilgehäuse 13 befestigt ist, am zweiten Gehäuseteil 44 ausgebildet.

Am Ventilschieber 14 ist einstückig ein Stößel 23 ausgebildet, der sich entlang der Längsachse 12 durch die drei Gehäuseteile 43, 44, 45 des Rastgehäuses 40 bis in die Nähe des (in Figur 1) linken Polrohrs 17 erstreckt, so dass der Ventilschieber 14 über den Stößel 23 vom linken Polrohr 17 elektromagnetisch angezogen werden kann. Dabei ist ein buchsen- bzw. hülsenartiger Rastschieber 20 auf den Stößel 23 aufgeschoben und mit einer Mutter 25 gegen eine radiale Erweiterung des Stößels 23 gespannt. Der Rastschieber 20 ist im ersten Gehäuseteil 43 des Rastgehäuses 40 entlang der Längsachse 12 verschiebbar aufgenommen. Am Außenumfang des Rastschiebers 20 sind drei als Umfangsnuten ausgebildete Rastkerben 21 vorgesehen.

In Figur 1 ist der Ventilschieber 14 in seiner durch zwei Federn 26, 26a zentrierten mittleren Grundstellung gezeigt, in der alle Anschlüsse A, B, P, T voneinander getrennt sind. Dem entsprechend befindet sich auch der Rastschieber 20 in seiner mittleren Position. Dabei ist in radialer Richtung (in Figur 1 von oben nach unten) eine Rastnase 32 in die mittlere Rastkerbe 21 eingeführt bzw. eingesetzt, so dass der Ventilschieber 14 in der Grundstellung formschlüssig fixiert ist. Die beiden seitlichen Rastkerben 21 weisen entlang der Längsachse 12 zur mittleren Rastkerbe den gleichen Abstand auf, wie die Schaltstellungen des Ventilschiebers 14 zu dessen Grundstellung.

Bevor der Ventilschieber 14 über eines der beiden Polrohre 17 in eine Schaltstellung geschaltet werden kann, muss die Rastnase 32 über eine Elektrospule 50 und einen Permanent- oder einen Ferromagneten 31 aus der Rastkerbe 21 radial herausgezogen bzw. in Figur 1 angehoben werden. Dabei ist der Permanent- oder der Ferromagnet 31 in einem Rastrohr 34 aufgenommen, das von der Spule 50 und von einem Anschlussgehäuse 51 umgriffen ist. Das Rastrohr 34 ist mit seinem offenen Ende 36 in das erste Gehäuseteil 43 eingeschraubt. Zwischen dem Permanent- oder dem Ferromagneten 31 und dem Rastrohr 34 ist eine Feder 37 eingespannt, über die die Rastnase 32 in Richtung der Rastkerben 21 gedrängt wird, so dass die erfindungsgemäße Rastvorrichtung 10 "normally locked" ist. Dem entsprechend muss die Spule 50 bestromt werden, um die erfindungsgemäße Rastvorrichtung 10 zu entrasten.

Zwischen dem Stößen 23 und dem dritten Gehäuseteil 45 ist eine optionale Verdrehsicherung 22 angeordnet. Wenn der Ventilschieber 14 mit dem Stößel 23 und der Rastschieber 20 mit den Umfangsnuten 21 rotationssymmetrisch sind, kann die Verdrehsicherung entfallen.

Figur 2 zeigt das Ausführungsbeispiel gemäß Figur 1 in einer perspektivischen Ansicht. Dabei ist das Ventilgehäuse 13 mit den beiden Arbeitsanschlüssen A, B dargestellt. Weiterhin sind die beiden seitlichen Polrohre 17, die zum Verschieben (in Figur 2 nicht gezeigten) Ventilschiebers 14 einschließlich des Stößels 23 und dem Rastschieber 20 dienen.

In Figur 2 ist das erste Gehäuseteil 43, das insbesondere den Rastschieber 20 umgreift, von diesem beabstandet dargestellt. Dabei ist zu erkennen, dass das erste Gehäuseteil 43 vier axiale Durchgangsausnehmungen 52 aufweist. Dem entsprechend sind vier Schraubbolzen 46 vorgesehen, von denen in Figur 2 nur ein Schraubbolzen 46 gezeigt ist. Diese werden in das dritte Gehäuseteil 45 eingeschraubt, wodurch ein in Figur 2 dargestellter Radialbund des zweiten Gehäuseteils 44 zwischen dem ersten Gehäuseteil 43 und dem zweiten Gehäuseteil 45 eingespannt wird.

Weiterhin ist in Figur 2 die Rastnase 32, das Anschlussgehäuse 51 und ein geschlossenes Ende 35 des Rastrohres 34 zu erkennen. Ergänzend zu Figur 1 ist in Figur 1 ein elektrischer Anschluss 54 gezeigt, über den die elektrische Schule 50 (vgl. Figur 1) zur Entrastung der erfindungsgemäßen Rastvorrichtung 10 mit Strom versorgt wird.

Figur 3 zeigt ein Anwendungsbeispiel eines erfindungsgemäßen Schieberventils 111 mit der Rastvorrichtung 10 gemäß den Figuren 1 und 2. Das Schieberventil 111 ist als 4/3-Wege-Schaltventil ausgebildet, das zur Auswahl eines Lenkmodus eines Fahrzeugs dient. Das Fahrzeug hat vier Räder 112a, 112b, wobei die beiden Vorderräder 112a über einen vorderen Lenkzylinder 114 und die beiden hinteren Räder 112b über einen hinteren Lenkzylinder 116 lenkbar sind. Beide Lenkzylinder 114, 116 sind als Gleichgangzylinder ausgebildet, wobei zwei Druckräume des hinteren Lenkzylinders 116 an die beiden Arbeitsanschlüsse A, B des Schieberventils 111 angeschlossen sind, während die beiden Druckräume des vorderen Lenkzylinders 114 an die beiden Arbeitsanschlüsse C, D des Schieberventils 111 angeschlossen sind.

In einer durch die beiden Federn 26, 26a vorgespannten in Figur 3 gezeigten Grundstellung des Ventilschiebers sind die beiden Arbeitsanschlüsse A, B abgesperrt, während die beiden Arbeitsanschlüsse C, D miteinander verbunden sind. In einer ersten Schaltstellung a des Schieberventils 111 sind der Arbeitsanschluss A mit dem Arbeitsanschluss C und der Arbeitsanschluss B mit dem Arbeitsanschluss D verbunden. In einer zweiten Schaltstellung b des Schieberventils 111 ist der Arbeitsanschluss A mit dem Arbeitsanschluss D und der Arbeitsanschluss B mit dem Arbeitsanschluss C verbunden.

Zwischen dem Arbeitsanschluss D und einem der beiden Druckräume des vorderen Lenkzylinders 114 ist eine Dosiereinheit 118 vorgesehen, über die Druckmittel wahlweise zum Arbeitsanschluss D oder zum ersten Druckraum des vorderen Lenkzylinders 114 gefördert werden kann. Die Dosiereinheit 118 hat ein Lenkventil, das in Abhängigkeit eines Lenkrades betätigt wird. Weiterhin hat die Dosiereinheit 118 eine Pumpe und einen Tankanschluss (nicht gezeigt).

Das mit der Rastvorrichtung 10 versehene Schieberventil 111 dient zur Auswahl eines Lenkmodus. In der in Figur 3 dargestellten mittleren durch die Federn 26, 26a vorgespannten Grundstellung erfolgt lediglich eine Lenkung der beiden Vorderräder 112a über den vorderen Lenkzylinder 114, wenn die Dosiervorrichtung 118 aktiviert wird. Dabei wird entweder der erste oder der zweite Druckraum des vorderen Lenkzylinders 114 von der Dosiereinheit 118 mit Druckmittel versorgt, während aus dem anderen Druckraum das verdrängte Druckmittel zur Dosiereinheit 118 zurückströmt. Der hintere Lenkzylinder 116 ist dabei in der in Figur 3 gezeigten mittleren Stellung fixiert, da seine beiden Druckräume über die beiden Arbeitsanschlüsse A, B, des Schieberventils 111 jeweils abgesperrt sind.

Die erste Schaltstellung a erlaubt einen so genannten "Crab-Steering"-Modus, bei dem die beiden Hinterräder 112b gleichsinnig bzw. parallel zu den beiden Vorderrädern 112a gelenkt werden. Dadurch kann das Fahrzeug geradlinig in eine Richtung bewegt werden, die schräg zu einer Fahrzeuglängsachse angestellt ist.

Die Schaltstellung b erlaubt einen so genannten "All-Wheel-Steering"-Modus, bei dem die beiden Hinterräder 112b entgegen den beiden Vorderrädern 112a gelenkt werden. Dadurch wird das Heck des Fahrzeugs auf der gleichen Kurvenbahn wie die Front des Fahrzeugs geführt, so dass die Fahrzeuglängsachse etwa tangential zur Kurvenbahn ausgerichtet ist.

Je nach gewünschtem Modus wird der Ventilschieber 14 (vgl. Figur 1) geschaltet und daraufhin durch die erfindungsgemäße Rastvorrichtung 10 verrastet, wobei die Feder 37 auch in einem unbestromten Zustand der Spule 50 stets die Verrastung aufrecht erhält und ein versehentliches Umschalten des Lenkmodus verhindert.

Offenbart ist eine Rastvorrichtung für ein Schieberventil, das ein Ventilgehäuse umfasst, in dem ein Ventilschieber bezüglich einer Längsachse linearbeweglich aufgenommen ist. Die Rastvorrichtung weist ein - vorzugsweise linearbewegliches - Rastelement auf, welches direkt oder indirekt formschlüssig in wenigstens eine Rastkerbe eingreifen kann. Dabei ist die wenigstens eine Rastkerbe so mit dem Ventilschieber gekoppelt, dass dieser entlang der Längsachse fixiert ist bzw. nicht mehr relativ zum Ventilgehäuse bewegt werden kann, wenn das Rastelement in die wenigstens eine Rastkerbe eingerastet ist. Eine erste Feder spannt das Rastelement in Richtung der Rastkerbe vor. Dabei umfasst das Rastelement einen Permanent- oder eine Ferromagneten und die Rastvorrichtung eine elektrische Spule, welche ein Magnetfeld erzeugen kann, mit dem das Rastelement gegen die Vorspannkraft der ersten Feder bewegt und außer Eingriff mit der wenigstens einen Rastkerbe gebracht werden kann.

### Bezugszeichenliste:

- 10: Rastvorrichtung
- 11;111: Schieberventil
- 12: Längsachse
- 13: Ventilgehäuse
- 14: Ventilschieber
- 15: erstes Innengewinde
- 16: zweites Innengewinde
- 17: Polrohr
- 20: Rastschieber
- 21: Rastkerbe
- 22: Verdrehsicherung
- 23: Stößel
- 25: Mutter
- 26: zweite Feder
- 26a: dritte Feder
- 27: Scheibe
- 30: Rastelement
- 31: Permanent- oder Ferromagnet
- 32: Rastnase
- 33: Druckausgleichsdurchgang
- 34: Rastrohr
- 35: geschlossenes Ende
- 36: offenes Ende
- 37: erste Feder
- 40: Rastgehäuse
- 41: Außengewinde
- 42: Innengewinde
- 43: erstes Gehäuseteil
- 44: zweites Gehäuseteil
- 45: drittes Gehäuseteil
- 46: Schraubbolzen
- 50: elektrische Spule
- 51: Anschlussgehäuse
- 52: Durchgangsausnehmung
- 54: elektrischer Anschluss
- 112a: Vorderrad
- 112b: Hinterrad
- 114: vorderer Lenkzylinder
- 116: hinterer Lenkzylinder
- 118: Dosiereinheit

- a, b: Schaltstellung
- A, B, C, D: Arbeitsanschluss
- P: Pumpenanschluss
- T: Tankanschluss

## Patentansprüche

1. Schieberventil (11; 111) mit einer Rastvorrichtung (10) und mit einem Ventilgehäuse (13), in dem ein Ventilschieber (14) bezüglich einer Längsachse (12) linearbeweglich aufgenommen ist,
wobei die Rastvorrichtung (10) ein Rastelement (30) aufweist, welches formschlüssig in wenigstens eine Rastkerbe (21) eingreifen kann, wobei die wenigstens eine Rastkerbe (21) so mit dem Ventilschieber (14) gekoppelt ist, dass dieser entlang der Längsachse (12) fixiert ist, wobei eine erste Feder (37) vorgesehen ist, welche das Rastelement (30) in Richtung der Rastkerbe (21) vorspannt,
wobei das Rastelement (30) einen Permanent- oder einen Ferromagneten umfasst, wobei die Rastvorrichtung (10) eine elektrische Spule (50) umfasst, welche ein Magnetfeld erzeugen kann, mit dem das Rastelement (30) gegen die Vorspannkraft der ersten Feder (37) bewegt und außer Eingriff mit der wenigstens einen Rastkerbe (21) gebracht werden kann, wobei die Rastvorrichtung (10) ein Rastgehäuse (40) umfasst, in dem ein Rastschieber (20) bezüglich der Längsachse (12) linearbeweglich aufgenommen ist, wobei die wenigstens eine Rastkerbe (21) an dem Rastschieber (20) vorgesehen ist,
**dadurch gekennzeichnet, dass** das Ventilgehäuse (13) ein erstes und ein zweites Innengewinde (15, 16) zum Anschluss eines Polrohrs (17) aufweist, wobei das erste und das zweite Innengewinde (15, 16) konzentrisch bezüglich der Längsachse (12) an den gegenüberliegenden Seiten des Ventilgehäuses (13) angeordnet sind, wobei das Rastgehäuse (40) ein Außengewinde (41) aufweist, welches zum Eingriff mit dem ersten oder dem zweiten Innengewinde (15, 16) am Ventilgehäuse (13) ausgebildet ist, wobei am Rastgehäuse (40) gegenüberliegend zum Außengewinde (41) ein Innengewinde (42) vorgesehen ist, welches komplementär zum Außengewinde (41) ausgebildet und konzentrisch zur Längsachse (12) angeordnet ist.

2. Schieberventil (11; 111) nach Anspruch 1,
**dadurch gekennzeichnet, dass** das Rastgehäuse (40) wenigstens ein erstes und ein zweites Gehäuseteil (43, 44) aufweist, wobei der Rastschieber (20) ausschließlich am ersten Gehäuseteil (43) bezüglich der Längsachse (12) geführt ist, wobei das Außengewinde (41) am zweiten Gehäuseteil (44) vorgesehen ist, wobei das erste und
das zweite Gehäuseteil (43, 44) mit wenigstens einem Schraubbolzen (46) verbunden sind, welcher das erste Gehäuseteil (43) durchsetzt und vom Innengewinde (42) her einschraubbar ist.

3. Schieberventil (11; 111) nach Anspruch 2,
**dadurch gekennzeichnet, dass** das zweite Gehäuseteil (44) rotationssymmetrisch ausgebildet ist, wobei ein drittes Gehäuseteil (45) vorgesehen ist, welches das zweite Gehäuseteil (44) umgreift, wobei der wenigstens eine Schraubbolzen (46) in das dritte Gehäuseteil (45) einschraubbar ist.

4. Schieberventil (11; 111) nach Anspruch 2 oder 3,
**dadurch gekennzeichnet, dass** eine zweite Feder (26) zwischen dem zweiten Gehäuseteil (44) und dem Ventilschieber (14) vorgesehen ist, welche am zweiten Gehäuseteil (44) abgestützt ist.

5. Schieberventil (11; 111) nach einem der vorstehenden Ansprüche,
**dadurch gekennzeichnet, dass** die wenigstens eine Rastkerbe (21) rotationssymmetrisch bezüglich der Längsachse (12) ausgebildet ist.

6. Schieberventil (11; 111) nach einem der vorstehenden Ansprüche,
**dadurch gekennzeichnet, dass** die wenigstens eine Rastkerbe (21) senkrecht zur Längsachse (12) angeordnete Flanken aufweisen, wobei das Rastelement (30) an die Rastkerbe (21) angepasst ist.

7. Schieberventil (11; 111) nach einem der vorstehenden Ansprüche,
**dadurch gekennzeichnet, dass** das Rastelement (30) eine gesonderte Rastnase (32) aus Stahl umfasst, welche in die wenigstens eine Rastkerbe (21) eingreifen kann, wobei die Rastnase (32) fest mit dem Permanent- oder dem Ferromagneten verbunden ist.

8. Schieberventil (11; 111) nach einem der vorstehenden Ansprüche,
**dadurch gekennzeichnet, dass** das Rastelement (30) in einem gesonderten Rastrohr (34) aufgenommen ist, welches ein dicht verschlossenes Ende (35) und ein gegenüber liegendes offenes Ende (36) hat, wobei das Rastrohr (34) am offenen
Ende (36) mit dem Rastgehäuse (40) fest verbunden ist, wobei der Permanent- oder der Ferromagnet gleitbeweglich an der Innenseite des Rastrohrs (34) geführt ist, wobei die Spule (50) das Rastrohr (34) umgibt.

9. Schieberventil (11; 111) nach Anspruch 8,
**dadurch gekennzeichnet, dass** das Rastelement (30) wenigstens einen Druckausgleichsdurchgang (33) aufweist, welcher das Rastelement (30) in Erstreckungsrichtung des Rastrohres (34) durchsetzt.

## Claims

1. Sliding valve (11; 111) having a detent mechanism (10) and having a valve housing (13) in which a valve slide (14) is accommodated so as to be linearly movable with reference to a longitudinal axis (12), wherein the detent mechanism (10) has a detent element (30) which is able to engage in a positive locking manner in at least one detent notch (21), wherein the at least one detent notch (21) is coupled with the valve slide (14) such that said valve slide is fixed along the longitudinal axis (12), wherein there is provided a first spring (37) which prestresses the detent element (30) in the direction of the detent notch (21), wherein the detent element (30) includes a permanent magnet or a ferromagnet, wherein the detent mechanism (10) includes an electric coil (50) which is able to generate a magnetic field, by way of which the detent element (30) is able to be moved in opposition to the prestressing force of the first spring (37) and out of engagement with the at least one detent notch (21), wherien the detent mechanism (10) includes a detent housing (40) in which a detent slide (20) is accommodated so as to be linearly movable with reference to the longitudinal axis (12), wherein the at least one detent notch (21) is provided on the detent slide (20), **characterized in that** the valve housing (13) has a first and a second internal thread (15, 16) for the connection of a polar tube (17), wherein the first and the second internal thread (15, 16) are arranged in a concentric manner with reference to the longitudinal axis (12) on the opposite sides of the valve housing (13), wherein the detent housing (40) has an external thread (41) which is realized for engagement with the first or the second internal thread (15, 16) on the valve housing (13), wherein an internal thread (42), which is realized in a complementary manner to the external thread (41) and is arranged in a concentric manner with respect to the longitudinal axis (12), is provided opposite the external thread (41) on the detent housing (40).

2. Sliding valve (11; 111) according to Claim 1, **characterized in that** the detent housing (40) has at least one first and one second housing part (43, 44), wherein the detent slide (20) is guided exclusively on the first housing part (43) with reference to the longitudinal axis (12), wherein the external thread (41) is provided on the second housing part (44), wherein the first and the second housing part (43, 44) are connected to at least one screw bolt (46) which penetrates the first housing part (43) and can be screwed in from the internal thread (42).

3. Sliding valve (11; 111) according to Claim 2, **characterized in that** the second housing part (44) is rotationally symmetrical, wherein there is provided a third housing part (45) which engages around the second housing part (44), wherein the at least one screw bolt (46) can be screwed into the third housing part (45).

4. Sliding valve (11; 111) according to Claim 2 or 3, **characterized in that** a second spring (26), which is supported on the second housing part (44), is provided between the second housing part (44) and the valve slide (14).

5. Sliding valve (11; 111) according to one of the preceding claims, **characterized in that** the at least one detent notch (21) is rotationally symmetrical with reference to the longitudinal axis (12).

6. Sliding valve (11; 111) according to one of the preceding claims, **characterized in that** the at least one detent notch (21) has flanks arranged at right angles to the longitudinal axis (12), wherein the detent element (30) is adapted to the detent notch (21) .

7. Sliding valve (11; 111) according to one of the preceding claims, **characterized in that** the detent element (30) includes a separate detent nose (32) of steel which is able to engage in the at least one detent notch (21), wherein the detent nose (32) is fixedly connected to the permanent magnet or the ferromagnet.

8. Sliding valve (11; 111) according to one of the preceding claims, **characterized in that** the detent element (30) is accommodated in a separate detent tube (34) which has a tightly sealed end (35) and an opposite open end (36), wherein the detent tube (34) is fixedly connected to the detent housing (40) at the open end (36), wherein the permanent magnet or ferromagnet is guided so as to be slidingly movable on the inside surface of the detent tube (34), wherein the coil (50) surrounds the detent tube (34).

9. Sliding valve (11; 111) according to Claim 8, **characterized in that** the detent element (30) has at least one pressure compensation passage (33) which penetrates the detent element (30) in the direction of extension of the detent tube (34).

## Revendications

1. Soupape à tiroir (11 ; 111) comprenant un dispositif d'encliquetage (10) et un boîtier de soupape (13) dans lequel est reçu un tiroir de soupape (14) déplaçable linéairement par rapport à un axe longitudinal (12),
le dispositif d'encliquetage (10) présentant un élément d'encliquetage (30) qui peut s'engager par correspondance de formes dans au moins une encoche d'encliquetage (21), l'au moins une encoche d'encliquetage (21) étant accouplée au tiroir de soupape (14) de telle sorte que celui-ci soit fixé le long de l'axe longitudinal (12), un premier ressort (37) étant prévu, lequel précontraint l'élément d'encliquetage (30) dans la direction de l'encoche d'encliquetage (21),
l'élément d'encliquetage (30) comprenant un aimant permanent ou un aimant ferromagnétique, le dispositif d'encliquetage (10) comprenant une bobine électrique (50) qui peut générer un champ magnétique avec lequel l'élément d'encliquetage (30) peut être déplacé à l'encontre de la force de précontrainte du premier ressort (37) et peut être amené hors d'engagement avec l'au moins une encoche d'encliquetage (21), le dispositif d'encliquetage (10) comprenant un boîtier d'encliquetage (40) dans lequel est reçu un tiroir d'encliquetage (20) déplaçable linéairement par rapport à l'axe longitudinal (12), l'au moins une encoche d'encliquetage (21) étant prévue au niveau du tiroir d'encliquetage (20),
**caractérisée en ce que** le boîtier de soupape (13) présente un premier et un deuxième filetage intérieur (15, 16) pour le raccordement d'un tube polaire (17), le premier et le deuxième filetage intérieur (15, 16) étant disposés concentriquement par rapport à l'axe longitudinal (12) au niveau des côtés opposés du boîtier de soupape (13), le boîtier d'encliquetage (40) présentant un filetage extérieur (41) qui est réalisé de manière à s'engager avec le premier ou le deuxième filetage intérieur (15, 16) au niveau du boîtier de soupape (13), un filetage intérieur (42) étant prévu au niveau du boîtier d'encliquetage (40) à l'opposé du filetage extérieur (41), lequel est réalisé de manière complémentaire au filetage extérieur (41) et est disposé concentriquement par rapport à l'axe longitudinal (12).

2. Soupape à tiroir (11 ; 111) selon la revendication 1,
**caractérisée en ce que** le boîtier d'encliquetage (40) présente au moins une première et une deuxième partie de boîtier (43, 44), le tiroir d'encliquetage (20) étant guidé par rapport à l'axe longitudinal (12) exclusivement au niveau de la première partie de boîtier (43), le filetage extérieur (41) étant prévu au niveau de la deuxième partie de boîtier (44), la première et la deuxième partie de boîtier (43, 44) étant connectées avec au moins un boulon fileté (46) qui traverse la première partie de boîtier (43) et qui peut être vissé à partir du filetage intérieur (42) .

3. Soupape à tiroir (11 ; 111) selon la revendication 2,
**caractérisée en ce que** la deuxième partie de boîtier (44) est réalisée avec une symétrie de révolution, une troisième partie de boîtier (45) étant prévue, laquelle vient en prise autour de la deuxième partie de boîtier (44), l'au moins un boulon fileté (46) pouvant être vissé dans la troisième partie de boîtier (45).

4. Soupape à tiroir (11 ; 111) selon la revendication 2 ou 3,
**caractérisée en ce qu'**un deuxième ressort (26) est prévu entre la deuxième partie de boîtier (44) et le tiroir de soupape (14), lequel est supporté sur la deuxième partie de boîtier (44).

5. Soupape à tiroir (11 ; 111) selon l'une quelconque des revendications précédentes,
**caractérisée en ce que** l'au moins une encoche d'encliquetage (21) est réalisée avec une symétrie de révolution par rapport à l'axe longitudinal (12) .

6. Soupape à tiroir (11 ; 111) selon l'une quelconque des revendications précédentes,
**caractérisée en ce que** l'au moins une encoche d'encliquetage (21) présente des flancs disposés perpendiculairement à l'axe longitudinal (12), l'élément d'encliquetage (30) étant adapté à l'encoche d'encliquetage (21).

7. Soupape à tiroir (11 ; 111) selon l'une quelconque des revendications précédentes,
**caractérisée en ce que** l'élément d'encliquetage (30) comprend un ergot d'encliquetage séparé (32) en acier qui peut s'engager dans l'au moins une encoche d'encliquetage (21), l'ergot d'encliquetage (32) étant connecté fixement à l'aimant permanent ou à l'aimant ferromagnétique.

8. Soupape à tiroir (11 ; 111) selon l'une quelconque des revendications précédentes,
**caractérisée en ce que** l'élément d'encliquetage (30) est reçu dans un tube d'encliquetage séparé (34) qui présente une extrémité fermée hermétiquement (35) et une extrémité ouverte opposée (36), le tube d'encliquetage (34) étant connecté fixement au niveau de l'extrémité ouverte (36) au boîtier d'encliquetage (40), l'aimant permanent ou l'aimant ferromagnétique étant guidé de manière coulissante au niveau du côté intérieur du tube d'encliquetage (34), la bobine (50) entourant le tube d'encliquetage (34).

9. Soupape à tiroir (11 ; 111) selon la revendication 8,
**caractérisée en ce que** l'élément d'encliquetage (30) présente au moins un passage d'équilibrage de la pression (33) qui presse l'élément d'encliquetage (30) dans la direction d'étendue du tube d'encliquetage (34).
